Europäisches Patentamt

European Patent Office

Office européen des brevets

(11) Numéro de publication: **0 233 093**
**A1**

# DEMANDE DE BREVET EUROPEEN

(21) Numéro de dépôt: 87400028.4

(22) Date de dépôt: 08.01.87

(51) Int. Cl.⁴: **F 42 B 35/00**

(30) Priorité: 13.01.86 FR 8600362

(43) Date de publication de la demande:
19.08.87 Bulletin 87/34

(84) Etats contractants désignés:
AT BE CH DE ES GB GR IT LI LU NL SE

(71) Demandeur: **CONSTRUCTIONS NAVALES ET INDUSTRIELLES DE LA MEDITERRANEE**
**Boîte Postale no 208**
**F-83507 La Seyne sur Mer Cedex (FR)**

(72) Inventeur: **Dequenes, Pierre**
**La Grange Avenue E. Roller**
**F-83200 Toulon (FR)**

**Franceschi, Jean-Claude**
**Impasse Ricaud**
**F-83000 Toulon (FR)**

(74) Mandataire: **Armengaud Ainé, Alain**
**Cabinet ARMENGAUD AINE 3 Avenue Bugeaud**
**F-75116 Paris (FR)**

(54) Dispositif pour engendrer des efforts transversaux sur des maquettes d'engins balistiques, lors d'essais aériens.

(57) Dispositif qui comprend une structure-support inclinable (10), fixée sur une charpente ou un portique de récupération (12); un chariot (16), entraîné par la maquette (M), muni de moyens de guidage le long de ladite structure-support, ce chariot portant un vérin mobile (18) réglant l'effort transversal appliqué sur l'une des extrémités de la tige dudit vérin et transmis à la maquette par l'intermédiaire de l'autre extrémité de ladite tige ; un ensemble de charges variables (20), communiquant à la maquette l'effort transversal désiré, ces charges étant fixées à l'extrémité d'un câble (22) s'enroulant sur un treuil électrique (48), monté à l'extrémité supérieure de ladite structure-support, le câble dudit palan venant s'enrouler sur des poulies de renvoi fixées sur ledit chariot, l'une (24) desdites poulies étant montée à ladite extrémité de la tige du vérin qui transmet l'effort transversal : et un système de cames (26-28), montées sur ladite structure-support et coopérant avec un galet (30), prévu sur ledit vérin, pour déplacer transversalement ledit vérin, en faisant varier l'effort transversal par modification automatique de la contre-pression dans ce vérin transversal.

Fig.2

# Description

## Dispositif pour engendrer des efforts transversaux sur des maquettes d'engins balistiques, lors d'essais aériens

La présente invention est relative à un dispositif générateur d'efforts transversaux sur des maquettes d'engins balistiques, lors d'essais aériens de telles maquettes.

La mise au point des engins balistiques tirés par des sous-marins s'effectue en éjectant des maquettes, à terre, en utilisant un tube dit tube d'essais aériens. Le générateur d'effort transversal est conçu de façon à créer sur la maquette un effort horizontal, voisin de celui engendré, dans la réalité, sur les engins balistiques par les effets hydrodynamiques dûs à la vitesse du sous-marin. L'effort devant être appliqué, à l'aide de ces générateurs, doit être variable en fonction de l'altitude de la maquette, dont la vitesse d'éjection est comprise entre 15 et 35 m/s, et il doit en outre tenir compte d'un déport horizontal de la maquette.

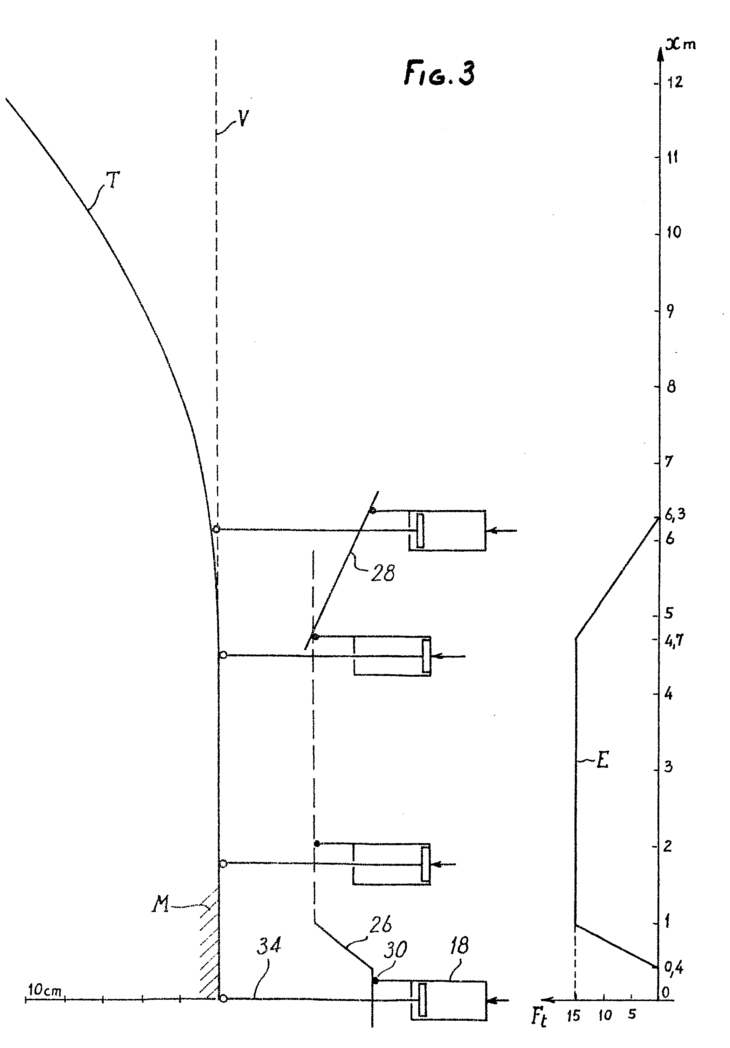

Sur la figure 3 des dessins annexés, en partie de droite, on a représenté la courbe E de la loi d'effort à appliquer, l'effort maximal en palier étant réglé entre 5 et 15 tonnes.

Le dispositif objet de cette invention est caractérisé en ce qu'il comprend :

- une structure-support inclinable, fixée sur le portique de récupération de la maquette, ou de toute autre charpente, à l'aide de moyens permettant de donner à la structure la même inclinaison que celle du tube lanceur de la maquette ;

- un chariot, entraîné par la maquette, muni de moyens de guidage le long de ladite structure-support, ce chariot portant un vérin mobile servant au réglage de l'effort transversal qui est appliqué sur l'une des extrémités de la tige dudit vérin et transmis à la maquette par l'intermédiaire de l'autre extrémité de ladite tige ;

- un ensemble de charges réglables, ou de vérins, communiquant à la maquette l'effort transversal désiré, ces charges étant fixées à l'extrémité d'un câble s'enroulant sur un treuil électrique, monté à l'extrémité supérieure de la structure-support, le câble dudit palan venant s'enrouler sur des poulies de renvoi fixées sur ledit chariot, l'une desdites poulies étant montée à ladite extrémité de la tige du vérin transmettant l'effort transversal ; et

- un système de cames réglables, montées sur ladite structure-support et coopérant avec un galet prévu sur ledit vérin pour déplacer ledit vérin en faisant varier l'effort transversal par modification automatique de la contre-pression dans ce vérin.

Selon l'invention, un bras articulé sur le chariot assure, à l'aide d'un prolongateur, la liaison entre l'extrémité de la tige du vérin et le nez de la maquette, ce bras de liaison étant muni de moyens pour assurer son escamotage en fin d'application de l'effort transversal.

Selon une autre caractéristique de cette invention, les moyens qui assurent l'escamotage dudit bras de liaison comprennent un câble et un dispositif d'éjection pyrométrique.

D'autres caractéristiques et avantages de cette invention ressortiront de la description faite ci-après en référence aux dessins annexés, qui en illustrent un exemple de réalisation dépourvu de tout caractère limitatif. Sur les dessins :

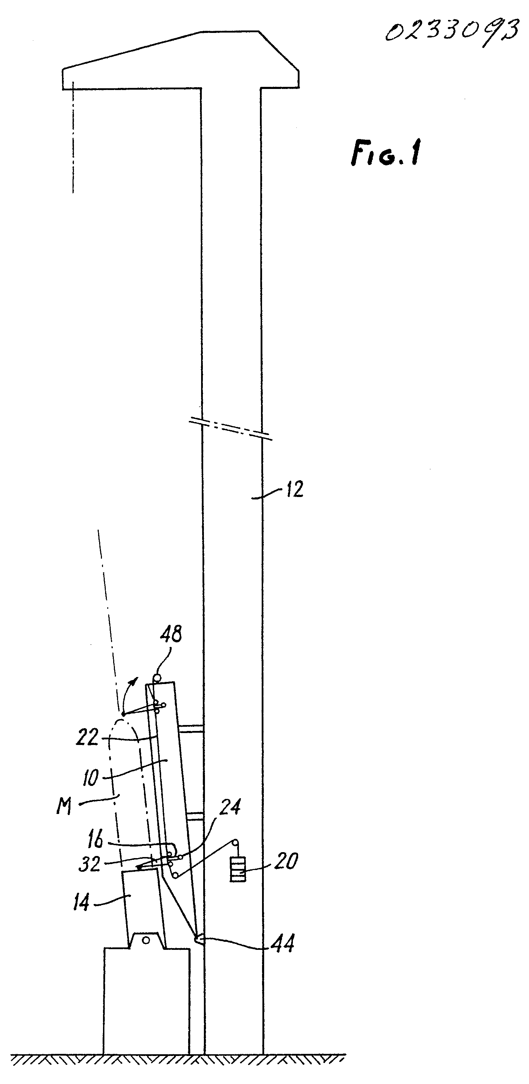

- la figure 1 est une vue schématique, en élévation latérale, représentant le dispositif selon l'invention, monté sur le portique de récupération de la maquette de missile ;

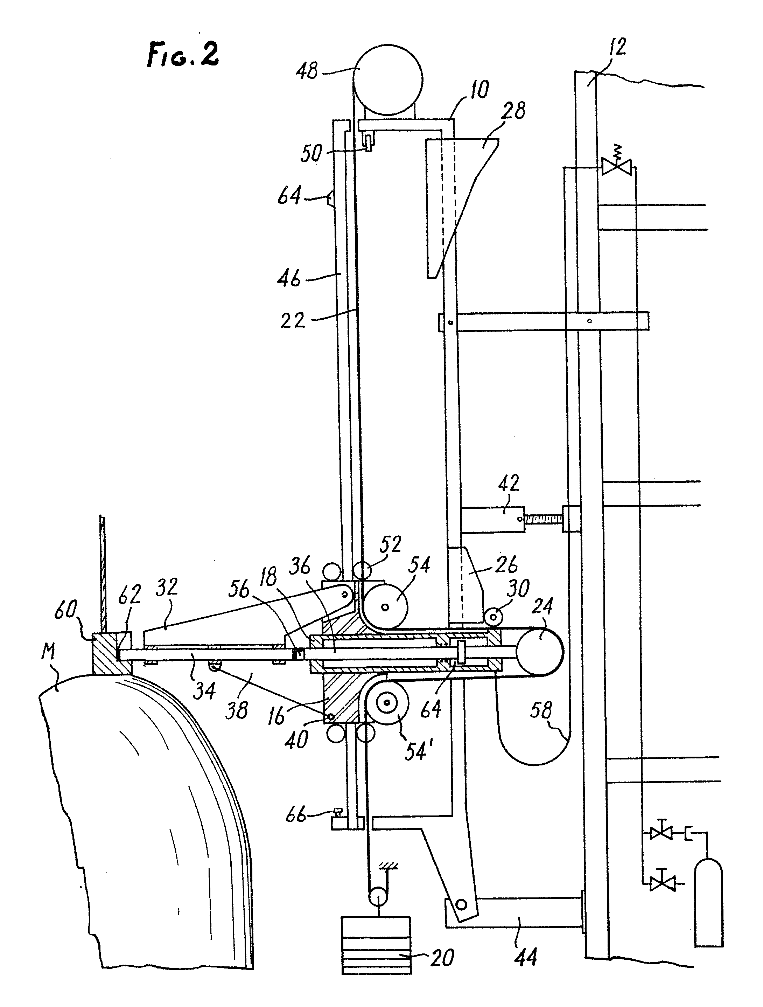

- la figure 2 est une vue à plus grande échelle illustrant en détail le dispositif générateur d'efforts transversaux selon cette invention;

- la figure 3 est un schéma qui illustre le fonctionnement du dispositif selon l'invention.

Le dispositif objet de cette invention a donc pour objectif d'appliquer un effort transversal sur une maquette d'engin balistique lors de son éjection à partir d'un tube de lancement, l'effort étant obtenu, selon l'invention, à l'aide d'une masse ajustable qui ne se déplace que du déport de la maquette. Le principe mécanique mis en oeuvre dans l'invention consiste à compenser l'effort créé par la masse à l'aide d'un vérin porté par un chariot entraîné par la maquette, le cylindre de ce vérin étant déplacé par des cames afin de faire varier l'effort transversal, par modification automatique de la contre-pression dans le vérin.

En se référant aux dessins, on voit que le dispositif objet de cette invention comprend essentiellement une structure-support inclinable 10, fixée sur le portique de récupération 12 de la maquette M, un chariot 16, portant le vérin 18 de compensation des efforts, ce chariot se déplaçant sur la structure-support 10, un système de charges réglables 20, pour développer l'effort transversal par l'intermédiaire d'une transmission par poulies et palan, et des cames réglables 26, 28 de début et de fin d'effort transversal.

La structure-support inclinable 10 est de préférence une structure mécano-soudée, réalisée à partir de profils standards. Elle est montée sur le portique de récupération 12 du missile M par l'intermédiaire d'un dispositif de réglage à vis 42, ou similaire, et d'un bras de liaison articulé 44, de manière à suivre la même inclinaison que celle du tube 14 assurant le lancement de la maquette. Cette structure 10 est munie de deux rails longitudinaux 46, permettant la circulation du chariot 16, et elle est pourvue des cames réglables 26 et 28. En outre, sur la partie supérieure de la structure 10 est fixé le treuil électrique 48 recevant le câble 22, auquel est accroché le système de charges réglables 20. On prévoit un amortisseur 50 pour arrêter le chariot en fin de course (fin d'application de l'effort).

Le chariot porte-vérin 16 est constitué d'un corps en alliage léger, muni de galets de guidage tels que 52, pouvant rouler sur les rails 46, et de deux poulies de renvoi 54, 54' sur lesquelles passe le câble 22, ces poulies permettant de transmettre l'effort transversal. L'une des poulies de renvoi (dans cet exemple de réalisation, il s'agit de la poulie 54') est munie d'un dispositif anti-dévireur, pour éviter la retombée du chariot après la fin du lancement de la maquette. Le chariot 16 reçoit le vérin mobile 18 qui assure le réglage de l'effort transversal. L'un des extrémités de la tige 36 du piston de ce vérin reçoit une poulie de renvoi 24, sur laquelle passe le câble 22, son autre extrémité étant pourvue d'un capteur d'effort 56. Le vérin 18 est de préférence un vérin pneumatique, alimenté en air comprimé à l'aide d'une conduite 58. Le cylindre du vérin mobile 18 comporte un galet 30 coopérant avec les cames réglables 26 et 28.

La liaison entre l'extrémité de la tige 36 du piston du vérin 18 et le nez 60 de la maquette M est assurée par l'intermédiaire d'un prolongateur 34, monté sur le capteur d'effort 56, supporté par un bras escamotable 32 en alliage léger, articulé sur le chariot, un amortisseur 62, de préférence en élastomère, étant interposé entre le nez de la maquette et l'extrémité du prolongateur 34. Dans cet exemple de réalisation, l'escamotage du bras 32 est obtenu à l'aide d'un système composé d'un câble 38 et d'un dispositif d'éjection pyrométrique 40.

L'effort transversal à transmettre à la maquette est développé par un système de charges ajustables 20, qui, dans cet exemple de réalisation, sont constituées par des blocs de béton, pouvant être assemblés les uns aux autres par des tirants pour obtenir une charge totale variable, ce système 20 étant supporté par le câble 22, qui s'enroule sur le treuil électrique 48 après passage sur les poulies de renvoi 24, 54 et 54' portées par le chariot 18, de telle manière qu'une charge F transmette un effort égal à F.

On comprend que les charges 20 développent un effort sur la poulie de renvoi 24, cet effort étant transmis au nez 60 de la maquette M par l'intermédiaire de la tige 36 du piston du vérin 18 et du prolongateur 34. En début d'effort, le cylindre du vérin 18 est bloqué en translation par la came 26, l'effort engendré par les charges étant annulé par la pression de l'air dans le vérin.

Lors du lancement de la maquette M, le déplacement vertical de celle-ci engendre un déplacement vertical correspondant du chariot 16, et ce déplacement engendre un déplacement du cylindre du vérin 18, en fonction du profil et de la position de la came 26. Ce déplacement du cylindre du vérin entraîne une augmentation du volume de la chambre 64 du piston du dit vérin, et, par conséquent, une diminution progressive de l'effort transversal donné par les charges 20.

Dès que le cylindre 18 quitte la came 26, l'effort développé par les masses 20 est total. Le prolongateur 34, la tige 36 du piston du vérin et le cylindre de ce dernier suivent la trajectoire de la maquette, le déplacement transversal dû à l'effort transverse étant compensé par le déplacement de la tige 36 et des charges 20.

L'annulation progressive de l'effort transversal est réalisée dès que le galet 30 vient au contact de la came 28. Lorsque le chariot 16 arrive en fin d'effort transversal, sur la came 28, un percuteur 65, prévu sur la structure-support 10, permet d'amorcer le dispositif pyrométrique 40, pour escamoter le bras de liaison 32.

En fin d'essai, le chariot est maintenu dans sa position haute par l'antidévireur 54', et il est ramené en position basse par le treuil électrique 48, ce déplacement permettant en outre d'affaler les charges 20. Dès que le chariot est ramené à sa position basse, délimitée par une butée mécanique inférieure 66, on dépose les charges sur le sol.

La chronologie du fonctionnement du générateur d'effort selon l'invention est donc la suivante :

1 - Etat initial :

La maquette est en place dans son tube de lancement 14, et le chariot 16 est en position basse. On règle les cames 26 et 28 pour obtenir la courbe d'efforts transversaux recherchée.

Le bras de liaison 32 est escamoté, les charges 20 sont affalées sur le sol, et il n'y a pas de pression dans la chambre 64 du vérin 18.

2 - Fonctionnement :

Le prolongateur 34, maintenu sur le bras de liaison 32, est mis en place sur le nez 60 de la maquette, et on arme le dispositif pyrométrique d'éjection 40.

On met le câble 22 sous tension, par action sur le treuil électrique 48, la valeur de l'effort étant vérifiée par le capteur 56.

Le vérin 18 est mis sous pression, par admission de l'air comprimé dans sa chambre 54. On met en charge la poulie de renvoir 24 en soulevant les charges 20 en position haute, et on règle la valeur de la pression pneumatique dans la chambre 65 du vérin afin d'obtenir l'effort voulu (par exemple 50 daN) sur le capteur 56.

On procède au lancement de la maquette.

Le dispositif générateur d'effort transversal fonctionne comme décrit ci-dessus, en communiquant à la maquette la trajectoire déportée T indiquée sur la figure 3, le chariot restant en position haute après le lancement. On descend enfin le chariot et les charges à l'aide du treuil électrique 48.

Il demeure bien entendu que cette invention n'est pas limitée à l'exemple de réalisation décrit et représenté, mais qu'elle en englobe toutes les variantes. En outre, l'effort transversal, dans un plan perpendiculaire au plan de tir, peut être exercé d'un côté ou de l'autre de la maquette.

**Revendications**

1 - Dispositif générateur d'efforts transversaux sur des maquettes d'engins balistiques pour essais aériens, à l'aide d'installations comprenant un tube de lancement de la maquette et un portique de récupération de cette dernière, ou toute autre charpente, caractérisé en ce qu'il comprend :
- une structure-support inclinable (10), fixée sur ledit portique de récupération (12) à l'aide de moyens permettant de donner à ladite structure (10) la même inclinaison que celle du tube lanceur (14) ;
- un chariot (16), entraîné par la maquette (M), muni de moyens de guidage le long de ladite structure-support, ce chariot portant un vérin mobile (18), servant au réglage de l'effort transversal qui est appliqué sur l'une des extrémités de la tige dudit vérin et transmis à la maquette par l'intermédiaire de l'autre extrémite de ladite tige ;

- un ensemble de charges variables (20), communiquant à la maquette l'effort transversal désiré, ces charges étant fixées à l'extrémité d'un câble (22) s'enroulant sur un treuil électrique (48), monté à l'extrémité supérieure de ladite structure-support, le câble dudit palan venant s'enrouler sur des poulies de renvoi fixées sur ledit chariot, l'une (24) desdites poulies étant montée à ladite extrémité de la tige du vérin qui transmet l'effort transversal ; et,

- un système de cames (26-28), montées sur ladite structure-support et coopérant avec un galet (30), prévu sur ledit vérin, pour déplacer transversalement ledit vérin, en faisant varier l'effort transversal par modification automatique de la contre-pression dans ce vérin transversal.

2 - Dispositif selon la revendication 1, caractérisé en ce qu'il comporte un bras (32) articulé sur le chariot, qui assure, à l'aide d'un prolongateur (34), la liaison entre l'extrémité de la tige (36) dudit vérin et le nez de maquette, ce bras de liaison étant muni de moyens pour assurer son escamotage en fin d'application de l'effort transversal.

3 - Dispositif selon la revendication 2, caractérisé en ce que les moyens qui assurent l'escamotage dudit bras de liaison comprennent un câble (38) et un dispositif d'éjection pyrométrique (40).

4 - Dispositif selon la revendication 1, caractérisé en ce que la position des cames (26-28) est réglable sur la structure-support (10), afin de modifier les instants de début et de fin d'application de l'effort transversal.

5 - Dispositif selon l'une quelconque des revendications précédentes, caractérisé en ce que l'une des poulies de renvoi (54') du chariot porte-vérin est pourvue d'une système anti-dévireur, pour éviter la retombée du chariot en fin de course.

6 - Dispositif selon l'une quelconque des revendications précédentes, caractérisé en ce que l'ensemble de charges variables est constitué par un vérin.

7 - Dispositif selon l'une quelconque des revendicaitons précédentes, caractérisé en ce que l'effort tansversal est exercé dans un plan perpendiculaire au plan de tir, d'un côté ou de l'autre de la maquette.

0233093

*0233093*

**Fɪɢ.1**

Fig. 2

0233093

0233093

Fig.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| | Néant. <br><br> ----- | | F 42 B  35/00 |
| | | | **DOMAINES TECHNIQUES RECHERCHES (Int. Cl.4)** <br><br> F 42 B  35 <br> F 02 K   9 <br> G 01 M  19 <br> G 01 M  10 |

Le présent rapport de recherche a été établi pour toutes les revendications

| Lieu de la recherche | Date d'achèvement de la recherche | Examinateur |
|---|---|---|
| LA HAYE | 16-04-1987 | VAN ASSCHE P.O. |